# EUROPEAN PATENT SPECIFICATION

(11) **EP 4 316 204 B1**
(45) Date of publication and mention of the grant of the patent: **07.05.2025**
(21) Application number: 22713331.1
(22) Date of filing: 02.03.2022
(51) Int. Cl.: H05B 6/64

(54) **COOKING DEVICE AND CONTROL METHOD THEREOF, AND COMPUTER-READABLE STORAGE MEDIUM**
KOCHVORRICHTUNG UND STEUERUNGSVERFAHREN DAFÜR SOWIE COMPUTERLESBARES SPEICHERMEDIUM
DISPOSITIF DE CUISSON ET SON PROCÉDÉ DE COMMANDE ET SUPPORT DE STOCKAGE LISIBLE PAR ORDINATEUR

(30) Priority: 25.03.2021 CN 202110319481
(43) Date of publication of application: 07.02.2024
(73) Proprietor: BSH Hausgeräte GmbH, 81739 München (DE)
(72) Inventor: PRAVIN SWAMINATHAN, Samuel, Bangalore 560103 (IN); YANG, Jia, Nanjing, Jiangsu 210046 (CN)
(86) International application number: PCT/EP2022/055264
(87) International publication number: WO 2022/200006

(56) References cited:
- WO-A1-2019/170830
- US-A1- 2020 260 529
- US-A1- 2020 363 778

## Description

### TECHNICAL FIELD

Embodiments of the present invention relate to the technical field of household appliances, and in particular, to a cooking device and a control method thereof, and a computer-readable storage medium.

### BACKGROUND

In recent years, cooking devices such as microwave ovens and ovens that can automatically heat food have been used more widely, becoming one of indispensable household appliances in every household. Heating principles of existing cooking devices are to apply energy to the surface of the food to heat the food from the outside to the inside. During heating, the cooking device can monitor only a chamber temperature of the cooking device cavity and a surface temperature of the food, and a user cannot intuitively know an actual internal temperature of the food. As a result, when the existing cooking devices are used to heat food, it often appears that the surface of the food has been cooked or even burnt, but the inside of the food is not cooked yet.

For the above case, a cooking device in the related art detects an internal temperature of food by inserting a probe into the food, so that a user knows whether the food is cooked through. However, such probe detection manner will obviously destroy the integrity of the surface of the food and affect an appearance of a final product.

In addition, the existing cooking devices can only mechanically heat food according to a time and a temperature set by the user, and is not intelligent enough to adapt to a current design concept of smart home appliances.

US 2020/363778 A1 discloses a system and method for cooking operations and pre-hazard monitoring using continuous and adaptive machine learning enabling user specific and customizable optimizable, specific, and customizable cooking operations, and identification of pre-hazardous and user specific non-optimal conditions that may arise during cooking.

### SUMMARY

An objective of embodiments of the present invention is to provide an improved cooking device and a control method thereof, and a computer-readable storage medium.

Therefore, an embodiment of the present invention provides a control method for a cooking device, including: performing monitoring during operation of a cooking device, to obtain monitoring data, where a dimension of the monitoring data includes at least one of a surface temperature of a cooked object, a weight of the cooked object, or a chamber temperature of the cooking device; inputting the monitoring data to a preset regression model, to obtain a predicted internal temperature of the cooked object, where the preset regression model is used for representing a correlation between an internal temperature of the cooked object and the monitoring data; and adjusting an operating status of the cooking device according to at least the predicted internal temperature of the cooked object.

According to the solution of this embodiment, intelligent control of the cooking device can be implemented, to optimize a cooking result. Specifically, measured parameters related to food are relatively comprehensive. In addition to surface temperature information, an internal temperature of food can be further predicted, which is conducive to accurately monitoring a real-time cooking state of the food. Further, the internal temperature of the food is obtained in a non-invasive manner based on a preset regression model without requiring a destructive method such as probe insertion, to ensure that an appearance of the food keeps intact. Further, an actual cooking state of the food is accurately measured according to a predicted internal temperature, so that an operating status of the cooking device is automatically adjusted, to optimize the cooking result, thereby ensuring better cooking results inside the food and on a surface of the food at the end of cooking.

Optionally, the adjusting an operating status of the cooking device according to at least the predicted internal temperature of the cooked object obtained through prediction includes: adjusting heating power of the cooking device according to a difference between the predicted internal temperature of the cooked object and a standard internal temperature. During cooking, heating power is adjusted in real time according to a result of comparison between two temperatures, to ensure that a degree of doneness of the food meets an expectation. Further, the degree of doneness of the food may be measured according to the result of comparison between two temperatures, and correction is performed in time when the degree of doneness deviates from the expectation. For example, when the degree of doneness is insufficient, the heating power can be increased, to accelerate cooking of the food. When the degree of doneness is overdone, the heating power can be reduced, to slow down further cooking of the food.

Optionally, the standard internal temperature is determined according to a standard recipe and/or historical data of the cooked object, to improve the accuracy of setting the standard internal temperature.

Optionally, the dimension of the monitoring data further includes chamber humidity of the cooking device, so that the cooking state of the food is monitored from the dimension of humidity and the operating status of the cooking device is adjusted.

Optionally, the adjusting an operating status of the cooking device according to at least the predicted internal temperature of the cooked object obtained through prediction includes: adjusting heating power of the cooking device according to a difference between the predicted internal temperature of the cooked object and a standard internal temperature; and adjusting a vapor conveying capacity of the cooking device according to a difference between the chamber humidity of the cooking device and standard humidity. Therefore, it can be ensured that the degree of doneness of the food meets the expectation, and it can also be ensured that a degree of dryness on the surface of the food meets the expectation. Further, the degree of doneness of the food may be measured according to the result of comparison between two temperatures, and correction is performed in time when the degree of doneness deviates from the expectation. For example, when the degree of doneness is insufficient, the heating power can be increased, to accelerate cooking of the food. In another example, when the degree of doneness is overdone, the heating power can be reduced, to slow down further cooking of the food. Further, water content of the food may be measured according to a result of comparison between two humidity, and correction is performed in time when the water content deviates from the expectation. For example, too little or too much water content will affect the taste of a final product, and a vapor conveying capacity may be adjusted to improve the water content, so that the food will not be cooked too dry or cooked too wet.

Optionally, the dimension of the monitoring data further includes: a thermodynamic image of the cooked object. A surface temperature and surface humidity of the cooked object may be obtained based on the thermodynamic image. Specifically, temperatures at a plurality of positions of the food can be reflected based on the thermodynamic image, and then a surface temperature determined according to the thermodynamic image can reflect an overall cooking state of the food more accurately.

Optionally, the adjusting an operating status of the cooking device according to at least the predicted internal temperature of the cooked object includes: adjusting heating power and/or a heating direction of at least one heating module in the cooking device according to a difference between the predicted internal temperature of the cooked object and a standard internal temperature and a difference between a real-time thermodynamic image of the cooked object ad a standard thermodynamic image, where the cooking device includes a plurality of heating modules, and the plurality of heating modules are dispersedly disposed on different regions of the cooking device. During cooking, heating power is adjusted in real time according to a result of comparison between two temperatures, to ensure that a degree of doneness of the food meets an expectation. Further, the degree of doneness of the food may be measured according to the result of comparison between two temperatures, and correction is performed in time when the degree of doneness deviates from the expectation. For example, when the degree of doneness is insufficient, the heating power can be increased, to accelerate cooking of the food. When the degree of doneness is overdone, the heating power can be reduced, to slow down further cooking of the food. Further, an uneven heating phenomenon can be accurately learned through comparison between thermodynamic images, so that the cooking device can automatically adopt an appropriate measure to eliminate the uneven heating phenomenon. For example, heating power and/or a heating direction of each heating module is adjusted in a targeted manner according to a specific uneven distribution of heating.

Optionally, the adjusting an operating status of the cooking device according to at least the predicted internal temperature of the cooked object includes: determining surface humidity of the cooked object according to the thermodynamic image of the cooked object; and adjusting a vapor conveying capacity and/or a spraying direction of at least one spraying module in the cooking device according to the surface humidity of the cooked object, where the cooking device includes a plurality of spraying modules, and the plurality of spraying modules are dispersedly disposed on different regions of the cooking device. Therefore, water content of the food is measured based on the surface humidity, and correction is performed in time when the water content deviates from the expectation. For example, too little or too much water content will affect the taste of a final product, and an operating status of the spraying module may be adjusted to improve the water content, so that the food will not be cooked too dry or cooked too wet. Further, the surface humidity determined according to the thermodynamic image can reflect a difference between water content of regions on the surface of the food. Based on the foregoing, the cooking device may differentially adjust the operating status of each spraying module for water content of different regions of the food, to balance an overall humidity condition of the surface of the food.

Optionally, the preset regression model is used for representing the correlation between the internal temperature of the cooked object and the monitoring data based on a prediction function, the prediction function is a result of weighted summation on monitoring data of a plurality of dimensions, and monitoring data of different dimensions correspond to different weights. A degree of impact of the monitoring data of each dimension on the predicted internal temperature is adjusted based on the weight, so that a correlation between an internal temperature of the food and the monitoring data represented by the prediction function is more consistent with an actual cooking condition of the food.

Optionally, the prediction function further includes an adjustment coefficient used for adjusting the result of weighted summation on monitoring data of a plurality of dimensions, so that the correlation between the internal temperature of the food and the monitoring data represented by the prediction function is more consistent with the actual cooking condition of the food, to improve the prediction accuracy of the prediction function for the internal temperature.

Optionally, a weight corresponding to monitoring data of each dimension is obtained through training according to historical data, and the historical data includes monitoring data obtained through monitoring during historical operation of the cooking device and a corresponding actually measured internal temperature of the cooked object. Therefore, the historical data is learned and trained by using a machine learning technology, to construct a prediction function that can accurately reflect the correlation between the internal temperature of the food and the monitoring data. Further, during current cooking, monitoring data obtained in real time is inputted into a prediction function obtained based on machine learning in advance, and non-invasive internal temperature measurement can be implemented.

Optionally, before the inputting the monitoring data to a preset regression model, to predict an internal temperature of the cooked object, the control method further includes: selecting the preset regression model from a plurality of candidate models according to the monitoring data, where different candidate models are obtained through training based on different sample sets, and the sample set includes monitoring data obtained through monitoring during historical operation of the cooking device and a corresponding actually measured internal temperature of the cooked object. The design of the plurality of candidate models can adapt to diversified use scenarios, so that a candidate model that best fits a current scenario can be selected as a final preset regression model when an internal temperature is predicted currently. Both monitoring data of different dimensions and different specific values of monitoring data of a same dimension may correspond to different use scenarios. Further, a plurality of pre-trained candidate models are further conducive to verifying a dimension of monitoring data having a correlation with the internal temperature of the food, to guide which dimensions of monitoring data should be preferentially acquired during actual cooking.

Optionally, monitoring data included in different sample sets is different in at least one dimension, and/or there are different quantities of dimensions of monitoring data included in different sample sets. When machine learning is performed on the historical data, monitoring data of different dimensions or monitoring data of different dimension combinations and a corresponding actually measured internal temperature may form different sample sets, so that candidate models respectively obtained through training based on different sample sets can represent correlations between the monitoring data of different dimensions or the monitoring data of different dimension combinations and the internal temperature.

Optionally, the dimension of the monitoring data included in the sample set further includes a thickness of the cooked object, and the dimension is also correlated with the internal temperature of the food.

Optionally, the selecting the preset regression model from a plurality of candidate models according to the monitoring data includes: inputting the monitoring data to at least one candidate model, to obtain an estimated internal temperature of the cooked object; and determining, in the plurality of candidate models, a candidate model with a highest prediction result close degree in a temperature interval in which the estimated internal temperature of the cooked object falls as the preset regression model, where the prediction result close degree refers to a similarity between a predicted internal temperature of the cooked object obtained by inputting the monitoring data obtained through monitoring during historical operation of the cooking device to the candidate model and the corresponding actually measured internal temperature of the cooked object. Therefore, the accuracy of predicting the internal temperature of the food can be improved.

Optionally, the preset regression model is in a one-to-one correspondence with a type of the cooked object. A preset regression model obtained through training for a specific ingredient is more representative and targeted, the interference of different types of food on a prediction result is eliminated, and the correlation between the internal temperature of the food and the monitoring data can be represented more accurately.

Optionally, the cooking device includes: an oven. Therefore, an embodiment of the present invention provides a non-invasive food internal temperature measurement method applicable to an oven application scenario. During baking, monitoring data of dimensions such as a surface temperature of food is captured by using a thermal imaging camera, and historical data is trained by using a machine learning technology, to obtain a correlation between an internal temperature of the food and the monitoring data. The internal temperature of the food is measured without using any additional temperature gauge or probe. Further, in this embodiment, after the internal temperature of the food is obtained, the oven can automatically adjust an operating status thereof according to a real-time internal temperature of the food, to improve a cooking result of the food, thereby implementing intelligent control of the oven.

Therefore, an embodiment of the present invention further provides a cooking device, including: a chamber, configured to accommodate a cooked object; a control module, configured to perform the foregoing method, to control an operating status of the cooking device; and a thermal imaging device, disposed inside the chamber for acquiring monitoring data of at least one dimension, where the control module communicates with the thermal imaging device to obtain the monitoring data. Therefore, the cooking device provided in this embodiment of the present invention can measure an internal temperature of food by using a non-invasive method during food cooking and adjust an operating status thereof according to a real-time internal temperature. For example, during cooking, monitoring data of dimensions such as a surface temperature of food is captured by using a thermal imaging camera, and historical data is trained by using a machine learning technology, to obtain a correlation between an internal temperature of the food and the monitoring data. The internal temperature of the food is measured without using any additional temperature gauge or probe. Further, after the internal temperature of the food is obtained, the control module can automatically adjust a specific operating state of the cooking device according to the internal temperature of the food, to improve a cooking result of the food, thereby implementing intelligent control of the cooking device.

Optionally, the cooking device further includes: a tray, configured to contain the cooked object; and a weight sensor, disposed on the tray for acquiring monitoring data of at least one dimension, where the control module communicates with the weight sensor, to obtain the monitoring data. Therefore, a weight of the food can be accurately acquired as one dimension of the monitoring data for subsequent prediction of the internal temperature.

Therefore, an embodiment of the present invention further provides a computer-readable storage medium, which is a non-volatile storage medium or a non-transient storage medium, having a computer program stored thereon, where the computer program, when executed by a processor, performs the steps of the foregoing method.

### BRIEF DESCRIPTION OF THE DRAWINGS

FIG. 1 is a schematic diagram of a cooking device according to an embodiment of the present invention.
FIG. 2 is a flowchart of a control method for a cooking device according to an embodiment of the present invention.

In the accompanying drawings:
1-Cooking device; 10-Chamber; 101-Adjustment key; 11-Control module; 12-Heating module; 13-Spraying module; 14-Thermal imaging device; 15-Weight sensor; 16-Tray; and 2-Cooked object.

### DETAILED DESCRIPTION

As described in the related art, the existing cooking devices cannot obtain an internal temperature of food without destroying an appearance of the food, and operation of the existing cooking devices is not intelligent enough to adapt to a design concept of smart home appliances.

To resolve the foregoing technical problems, an embodiment of the present invention provides a control method for a cooking device, including: performing monitoring during operation of a cooking device, to obtain monitoring data, where a dimension of the monitoring data includes at least one of a surface temperature of a cooked object, a weight of the cooked object, or a chamber temperature of the cooking device; inputting the monitoring data to a preset regression model, to obtain a predicted internal temperature of the cooked object, where the preset regression model is used for representing a correlation between an internal temperature of the cooked object and the monitoring data; and adjusting an operating status of the cooking device according to at least the predicted internal temperature of the cooked object.

According to the solution of this embodiment, intelligent control of the cooking device can be implemented, to optimize a cooking result. Specifically, measured parameters related to food are relatively comprehensive. In addition to surface temperature information, an internal temperature of food can be further predicted, which is conducive to accurately monitoring a real-time cooking state of the food. Further, the internal temperature of the food is obtained in a non-invasive manner based on a preset regression model without requiring a destructive method such as probe insertion, to ensure that an appearance of the food keeps intact. Further, an actual cooking state of the food is accurately measured according to a predicted internal temperature, so that an operating status of the cooking device is automatically adjusted, to optimize the cooking result, thereby ensuring better cooking results inside the food and on a surface of the food at the end of cooking.

To make the foregoing objectives, features, and advantages of the present invention clearer and easier to understand, specific embodiments of the present invention are described below in detail with reference to the accompanying drawings.

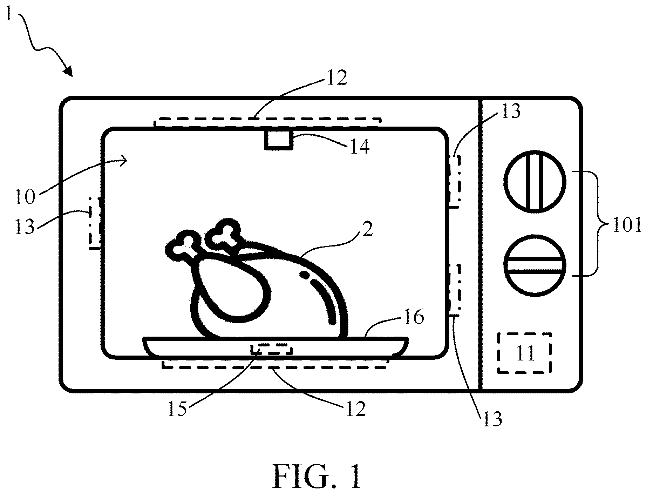

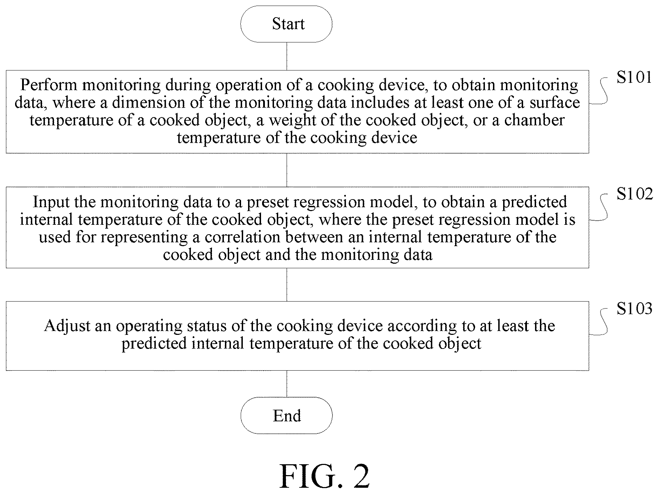

FIG. 1 is a schematic diagram of a cooking device according to an embodiment of the present invention. FIG. 2 is a flowchart of a control method for a cooking device according to an embodiment of the present invention. A cooking device 1 shown in FIG. 1 may perform the control method shown in FIG. 2, to measure an internal temperature of food by using a non-invasive method during food cooking and automatically adjust an operating status thereof according to the measured internal temperature.

Specifically, referring to FIG. 1, in this embodiment, the cooking device 1 may include: a chamber 10, configured to accommodate a cooked object. For example, the cooking device 1 may be provided with a door (not shown in the figure) that can open or close the chamber 10. When the door is opened, the chamber 10 is exposed for a user to take out or put into a cooked object 2 (that is, food). When the door is closed, the chamber 10 is closed. In this case, a cooking operation such as heating or baking may be performed on the cooked object 2 put into the chamber.

The cooking device 1 may further include an adjustment key 101, and an operating status of the cooking device 1 may be adjusted by operating the adjustment key 101. The operating status of the cooking device 1 may include heating power, a heating direction, a heating duration, a vapor conveying capacity, a vapor conveying direction, and the like. The operating statuses may be adjusted by adjusting operating statuses of specific function modules in the cooking device 1.

Further, the cooking device 1 may further include a control module 11, configured to adjust an operating status of a corresponding function module according to an instruction fed back from the adjustment key 101, so that the operating status of the cooking device 1 meets an indication of a user.

For example, the cooking device 1 may include a heating module 12, configured to heat the chamber 10, to achieve an effect of heating the cooked object 2. The cooking device 1 may include a plurality of heating modules 12, and the plurality of heating modules 12 are dispersedly disposed on different regions of the cooking device 1, to heat the chamber 10 from different angles, so that the cooked object 2 is heated evenly as much as possible. The control module 11 may independently adjust heating power of the heating modules 12, to adjust capacities of heat radiated from the heating modules 12 to the chamber 10. The control module 11 may further independently adjust heating directions of the heating modules 12, to adjust radiation angles of radiating heat from the heating modules 12 to the chamber 10. The control module 11 may further adjust a heating duration of a specific heating module 12 operating according to specific heating power.

In another example, the cooking device 1 may include a spraying module 13, configured to convey water vapor to the chamber 10, to adjust humidity in the chamber 10. Surface humidity of the cooked object 2 can be adjusted by adjusting the humidity in the chamber 10, so that water content of the cooked object 2 is moderate, to prevent the surface of the cooked object 2 from being heated too dry or too wet. The cooking device 1 may include a plurality of spraying modules 13, and the plurality of spraying modules 13 are dispersedly disposed on different regions of the cooking device 1, to convey water vapor to the chamber 10 from different angles, so that the surface humidity of the cooked object 2 is distributed evenly. The control module 11 may independently adjust vapor conveying capacities of the spraying modules 13. The control module 11 may also independently adjust vapor conveying directions of the spraying modules 13. The control module 11 may further adjust a spraying duration of a specific spraying module 13 operating according to a specific vapor conveying capacity.

It should be noted that a possible setting manner of the adjustment key 101 is exemplarily shown in FIG. 1 by a knob. In an actual application, the adjustment key 101 may alternatively be set in another form, for example, a touchscreen or a voice control module. One of two upper and lower knobs shown in FIG. 1 may be a duration adjustment knob, and the other may be a temperature adjustment knob.

Further, the control module 11 may perform the control method shown in FIG. 2, to automatically control the operating status of the cooking device 1 according to a predicted internal temperature of the cooked object 2. For example, the control module 11 may include an externally connected memory (not shown in the figure), the memory stores a computer program, and the computer program, when executed by a processor, performs steps of the control method shown in FIG. 2.

It should be noted that only a possible disposition position of the control module 11 in the cooking device 1 is exemplarily shown in FIG. 1. In an actual application, a specific disposition position of the control module 11 may be adjusted as required. In a variant embodiment, the control module 11 may be externally disposed to the cooking device 1. The cooking device 1 has a communication module (not shown in the figure), and the control module 11 communicates with the communication module, to send a control instruction to the cooking device 1, where the control instruction is used for controlling the operating status of the cooking device 1.

Further, the cooking device 1 may include a thermal imaging device 14, disposed in the chamber 10, to acquire monitoring data of at least one dimension. The control module 11 communicates with the thermal imaging device 14, to obtain the monitoring data acquired by the thermal imaging device 14.

For example, the thermal imaging device 14 may be a thermal imaging camera, disposed at the top of the chamber 10 and having an overlooking range that covers at least a tray 16.

Dimensions of the monitoring data may include: a surface temperature of the cooked object 2, a weight of the cooked object 2, a thickness of the cooked object 2, surface humidity of the cooked object 2, a chamber temperature of the chamber 10, chamber humidity of the chamber 10, and a thermodynamic image of the cooked object 2. One of common points of the monitoring data of the dimensions is that the monitoring data is peripheral data, that is, the monitoring data is data obtained by using a non-invasive method. That is, when the monitoring data of the dimensions is obtained, there is neither contact with the cooked object 2 nor damage to the surface of the cooked object 2.

The monitoring data of the dimensions may be acquired by using sensors disposed at different positions of the cooking device 1.

For example, a temperature gauge (not shown in the figure) may be disposed in the chamber 10, to acquire the chamber temperature of the chamber 10. In another example, a temperature gauge (not shown in the figure) may be disposed on the tray 16, to acquire the surface temperature of the cooked object 2. In another example, a hygrometer (not shown in the figure) may be disposed in the chamber 10, to acquire the chamber humidity of the chamber 10. In another example, a hygrometer (not shown in the figure) may be disposed on the tray 16, to acquire the surface humidity of the cooked object 2.

In another example, the thermodynamic image of the cooked object 2 may be obtained based on the thermal imaging device 14, and the surface temperature and the surface humidity of the cooked object 2 may be similarly obtained based on the thermodynamic image. Specifically, temperatures at a plurality of positions of food can be reflected based on a thermodynamic image, and then a surface temperature determined according to the thermodynamic image can reflect an overall cooking state of the food more accurately.

In another example, a thermodynamic image in the chamber 10 may be further obtained based on the thermal imaging device 14, to obtain the chamber temperature.

Further, corresponding surface humidity may be found according to a surface temperature based on the thermodynamic image of the cooked object 2 with reference to a preset temperature and humidity relationship table. The preset temperature and humidity relationship table may be a psychrometric chart, used for representing a curve of humidity changing with a temperature.

In another example, the cooking device 1 may include a weight sensor 15, configured to acquire the weight of the cooked object 2. Specifically, the cooking device 1 may include the tray 16, configured to contain the cooked object 2. Further, the weight sensor 15 may be disposed on the tray 16, for example, disposed at a center-of-gravity region or a center region of the tray 16. The control module 11 communicates with the weight sensor 15, to obtain the weight of the cooked object 2.

Further, the monitoring data may be further inputted by a user. For example, the weight of the cooked object 2 may be determined according to a value inputted by the user. In another example, the thickness of the cooked object 2 may also be determined according to information inputted by the user before cooking.

In a specific embodiment, referring to FIG. 2, the control method for a cooking device 1 according to this embodiment may include the following steps.

Step S101. Perform monitoring during operation of a cooking device, to obtain monitoring data, where a dimension of the monitoring data includes: at least one of a surface temperature of a cooked object, a weight of the cooked object, or a chamber temperature of the cooking device.

Step S102. Input the monitoring data to a preset regression model, to obtain a predicted internal temperature of the cooked object, where the preset regression model is used for representing a correlation between an internal temperature of the cooked object and the monitoring data.

Step S103. Adjust an operating status of the cooking device according to at least the predicted internal temperature of the cooked object.

Specifically, in response to that the cooking device 1 starts operating, the control module 11 may invoke the thermal imaging device 14 and the weight sensor 15 to perform a monitoring operation, to obtain monitoring data of at least one dimension. For example, when the adjustment key 101 is operated, the heating module 12 and/or the spraying module 13 is triggered. In this case, the control module 11 may invoke the weight sensor 15 to detect whether the cooked object 2 is placed on the tray 16.

If the weight sensor 15 detects that the cooked object 2 has been placed on the tray 16, it may be determined that cooking is started. Correspondingly, the control module 11 may invoke the thermal imaging device 14 to acquire monitoring data.

During operation of the cooking device 1, the control module 11 may regularly invoke the thermal imaging device 14 to acquire the monitoring data, so as to monitor a cooking state and a cooking process of the cooked object 2 in real time throughout the cooking process, which facilitates early intervention when the cooking process of the cooked object 2 deviates from an expectation.

In a specific embodiment, the preset regression model may be a prediction model obtained through training after historical data is learned by using a machine learning technology, and the preset regression model may be pre-trained and stored in the memory. The historical data may include monitoring data acquired during historical operation of the cooking device 1 and an actual internal temperature of the cooked object 2 acquired when the monitoring data is acquired. The actual internal temperature may be a value measured by inserting a probe or a temperature gauge into the cooked object 2.

During current operation of the cooking device 1, after obtaining the monitoring data by performing step S101, the control module 11 may invoke the preset regression model from the memory and input the obtained monitoring data to the preset regression model. An output of the preset regression model is a predicted internal temperature.

Therefore, during operation of the cooking device 1, peripheral data of the cooked object 2 is monitored, and then an internal temperature of the cooked object 2 is predicted by using a big data and artificial intelligence (AI) technology.

In a specific embodiment, the preset regression model is in a one-to-one correspondence with a type of the cooked object 2. A preset regression model obtained through training for a specific ingredient is more representative and targeted, the interference of different types of food on a prediction result is eliminated, and a correlation between an internal temperature of the food and the monitoring data can be represented more accurately.

Specifically, the preset regression model may be used for representing the correlation between the internal temperature of the cooked object and the monitoring data based on a prediction function, the prediction function is a result of weighted summation on monitoring data of a plurality of dimensions, and monitoring data of different dimensions correspond to different weights. A degree of impact of the monitoring data of each dimension on the predicted internal temperature is adjusted based on a weight, so that the correlation between the internal temperature of the food and the monitoring data represented by the prediction function is more consistent with an actual cooking condition of the food.

For example, the prediction function may be represented based on a formula Y=A1*X1+A2*X2+A3*X3, where Y is a predicted internal temperature, A1 is a first weight, X1 is a chamber temperature, A2 is a second weight, X2 is a surface temperature of the cooked object 2, A3 is a third weight, and X3 is a weight of the cooked object 2.

The first weight A1, the second weight A2, and the third weight A3 are to-be-trained coefficients. At a model training stage, an optimal first weight A1, second weight A2, and third weight A3 are obtained through training based on historical data, so that a predicted internal temperature outputted by the prediction function including the three weights is as close as possible to an actual internal temperature of the cooked object 2.

For example, the historical data may form a sample set, and the sample set may include monitoring data obtained through monitoring during historical operation of the cooking device 1 and a corresponding actually measured internal temperature of the cooked object 2. At the model training stage, the sample set may be classified as two parts of a training set and a verification set, where the training set is used for training a model, to obtain a candidate prediction function, and then the verification set is used for verifying whether a predicted internal temperature outputted by the candidate prediction function is sufficiently accurate.

In a typical application scenario, for weights X3 of different cooked objects 2, actual internal temperatures (which are used as values of Y of the prediction function during training) of the cooked objects 2 are measured by using a temperature probe during cooking.

Simultaneously, a chamber temperature X1 and surface temperatures X2 of the cooked objects 2 are obtained by using the thermal imaging device 14. In this way, a specific quantity of data samples (Y, X1, X2, and X3) may be obtained to form a training set. The training set may include 900 groups of data.

The prediction function Y=A1*X1+A2*X2+A3*X3 in the model is trained by using the training set, to obtain corresponding coefficients (A1, A2, and A3).

Subsequently, another certain quantity of data is obtained in a manner similar to that of obtaining the training set to form a verification set, to verify the prediction function obtained through training in the early stage. Finally, optimal model coefficients (A1, A2, and A3) are obtained.

In a variant embodiment, the prediction function may further include an adjustment coefficient, used for adjusting the result of weighted summation on monitoring data of a plurality of dimensions, so that the correlation between the internal temperature of the food and the monitoring data represented by the prediction function is more consistent with the actual cooking condition of the food, to improve the prediction accuracy of the prediction function for the internal temperature.

For example, in this variant embodiment, the prediction function may be represented based on a formula Y=A0+A1*X1+A2*X2+A3*X3, where A0 is the adjustment coefficient. Correspondingly, the adjustment coefficient A0, the first weight A1, the second weight A2, and the third weight A3 are to-be-trained coefficients.

Therefore, the historical data is learned and trained by using a machine learning technology, to construct a prediction function that can accurately reflect the correlation between the internal temperature of the food and the monitoring data. Further, during current cooking, monitoring data obtained in real time is inputted into a prediction function obtained based on machine learning in advance, and non-invasive internal temperature prediction can be implemented.

In a specific embodiment, before step S102 is performed, the control method in this embodiment may further includes the following step: selecting the preset regression model from a plurality of candidate models according to the monitoring data, where different candidate models are obtained through training based on different sample sets, and the sample set includes monitoring data obtained through monitoring during historical operation of the cooking device and a corresponding actually measured internal temperature of the cooked object.

The design of the plurality of candidate models can adapt to diversified use scenarios, so that a candidate model that best fits a current scenario can be selected as a final preset regression model when an internal temperature is predicted currently.

Specifically, both monitoring data of different dimensions and different specific values of monitoring data of the same dimension may correspond to different use scenarios. Further, a plurality of pre-trained candidate models are further conducive to verifying a dimension of monitoring data having a correlation with the internal temperature of the food, to guide which dimensions of monitoring data should be preferentially acquired during actual cooking.

In a specific embodiment, there may be different quantities of dimensions of monitoring data included in different sample sets.

For example, a candidate model m1 may be obtained through training based on a sample set a1, and a candidate model m2 may be obtained through training based on a sample set a2. It is assumed that a plurality of groups of training data included in the sample set a1 are measured during operation of the cooking device 1, where each group of training data includes (X1, X2, X3, and Y), which are used for describing an actually measured internal temperature Y of the cooked object 2 with a weight X3 at a chamber temperature X1 and a surface temperature X2 of the cooked object 2. It is assumed that a plurality of groups of training data included in the sample set a2 are measured during operation of the cooking device 1, where each group of training data includes (X2, X3, and Y), which are used for describing an actually measured internal temperature Y of the cooked object 2 with a weight X3 at a surface temperature X2 of the cooked object 2.

In this example, the sample set a1 includes monitoring data of three dimensions, and the sample set a2 includes monitoring data of two dimensions. It can be seen that the dimensions of the monitoring data included in the sample set a1 are greater than the dimensions of the monitoring data included in the sample set a2.

Correspondingly, before step S102 is performed, the candidate model m1 or the candidate model m2 is selected as a preset regression model according to the dimensions of the currently obtained monitoring data. It is assumed that the chamber temperature X1 is not acquired when step S101 is performed, it may be determined that the candidate model m2 is selected as the preset regression model used when step S102 is performed.

In another example, it is assumed that verification based on a verification set shows that the candidate model m1 predicts an internal temperature of food more accurately, it may be verified that at least the chamber temperature X1 has a positive effect for predicting the internal temperature. Therefore, when step S101 is performed, data acquisition may be preferably performed according to the dimensions of the monitoring data included in the sample set a1. In addition, when step S102 is performed, the candidate model m1 is used as the preset regression model.

In a variant embodiment, monitoring data included in different sample sets may be different in at least one dimension. For example, each group of training data in a sample set a1' may include (X1, X3, and Y), which are used for describing an actually measured internal temperature Y of the cooked object 2 with a weight X3 at a chamber temperature X1. Each group of training data in a sample set a2' includes (X2, X3, and Y), which are used for describing an actually measured internal temperature Y of the cooked object 2 with a weight X3 at a surface temperature X2 of the cooked object 2. In this case, the two sample sets include a same quantity of dimensions of monitoring data, but the specific dimensions are different.

Therefore, when machine learning is performed on the historical data, monitoring data of different dimensions or monitoring data of different dimension combinations and a corresponding actually measured internal temperature may form different sample sets, so that candidate models respectively obtained through training based on different sample sets can represent correlations between the monitoring data of different dimensions or the monitoring data of different dimension combinations and the internal temperature.

In a variant embodiment, monitoring data included in different sample sets may be different in at least one dimension, and there may be different quantities of dimensions of monitoring data included in different sample sets.

Further, specific values of monitoring data of a same dimension included in different sample sets may also be different.

For example, a candidate model FA1 may be obtained through training based on a sample set b1, a candidate model FA2 may be obtained through training based on a sample set b2, a candidate model FA3 may be obtained through training based on a sample set b3, and a candidate model FA4 may be obtained through training based on a sample set b4.

It is assumed that 900 groups of training data included in the sample set b1 are measured during operation of the cooking device 1, where each group of training data includes (X1, X2, X3, and Y), which are used for describing an actually measured internal temperature Y of the cooked object 2 with a weight X3 at a chamber temperature X1 and a surface temperature X2 of the cooked object 2. In the 900 groups of training data in the sample set b1, there are 300 groups each for X3=180g, 200g, and 250g, and a thickness of the cooked object 2 is a first value when X3=180g.

It is assumed that 900 groups of training data included in the sample set b2 are measured during operation of the cooking device 1, where each group of training data includes (X1, X2, X3, and Y), which are used for describing an actually measured internal temperature Y of the cooked object 2 with a weight X3 at a chamber temperature X1 and a surface temperature X2 of the cooked object 2. In the 900 groups of training data in the sample set b2, there are 300 groups each for X3=200g and 250g, there are 150 groups for X3=180g and a thickness of the cooked object 2 is a first value, and there are 150 groups for X3=180g and a thickness of the cooked object 2 is a second value. The first value is greater than the second value.

It is assumed that 900 groups of training data included in the sample set b3 are measured during operation of the cooking device 1, where each group of training data includes (X1, X2, X3, and Y), which are used for describing an actually measured internal temperature Y of the cooked object 2 with a weight X3 at a chamber temperature X1 and a surface temperature X2 of the cooked object 2. In the 900 groups of training data in the sample set b3, there are 300 groups each for X3=180g, 200g, and 250g, and a thickness of the cooked object 2 is the second value when X3=180g.

It is assumed that 900 groups of training data included in the sample set b4 are measured during operation of the cooking device 1, where each group of training data includes (X2, X3, and Y), which are used for describing an actually measured internal temperature Y of the cooked object 2 with a weight X3 at a surface temperature X2 of the cooked object 2. In the 900 groups of training data in the sample set b4, there are 300 groups each for X3=180g, 200g, and 250g, and a thickness of the cooked object 2 is the second value when X3=180g.

Therefore, for a same ingredient, the candidate models FA1 to FA4 may be respectively obtained through training based on four sample sets formed by different dimensions or different dimension combinations. Further, the four candidate models FA1 to FA4 are verified by using verification sets, and prediction result close degrees of the candidate models for internal temperatures of the cooked objects 2 with different thicknesses and weights may be verified. The prediction result close degree is a similarity between a predicted internal temperature of the cooked object 2 obtained by inputting the monitoring data obtained through monitoring during historical operation of the cooking device 1 into the candidate model and the corresponding actually measured internal temperature of the cooked object 2.

For example, after the candidate models FA1 to FA4 are obtained through training, it is found through verification by using the verification sets that when the candidate model FA4 is used for predicting internal temperatures of the cooked objects 2 with various weights and thicknesses, a change curve of a predicted internal temperature obtained is smoother than a change curve obtained using another candidate model.

In another example, after the candidate models FA1 to FA4 are obtained through training, it is found through verification by using the verification sets that the four candidate models have relatively high prediction result close degrees for a cooked object 2 with a thickness of the second value and a weight X3=180g and a cooked object 2 with a weight X3=200g.

As a quantity of training data included in the sample set increases, a prediction result close degree of a candidate model obtained through training will become higher.

For example, candidate models are FA1 to FA4. After step S101 is performed to obtain monitoring data of at least one dimension, and before step S102 is performed, the control module 11 may first select a candidate model with a higher prediction result close degree determined during verification as a preset regression model according to a thickness and a weight of the cooked object 2, and then perform step S102, to obtain a predicted internal temperature obtained based on the preset regression model.

Optionally, in a specific embodiment, the selecting the preset regression model from a plurality of candidate models according to the monitoring data may include: inputting the monitoring data to at least one candidate model, to obtain an estimated internal temperature of the cooked object; and determining, in the plurality of candidate models, a candidate model with a highest prediction result close degree in a temperature interval in which the estimated internal temperature of the cooked object falls as the preset regression model. Therefore, the accuracy of predicting the internal temperature of the food can be improved.

For example, after a plurality of candidate models are obtained based on a plurality of sample sets, prediction result close degrees of the candidate models are verified by using verification sets. The prediction result close degree corresponds to a temperature, and a candidate model with a highest prediction result close degree may be found from each temperature interval. Correspondingly, after step S101 is performed to obtain real-time monitoring data, any candidate model may be selected for first predicting the monitoring data once. An estimated internal temperature obtained through the current prediction may be used for determining a rough temperature interval in which an actual internal temperature of the cooked object 2 falls. Subsequently, a candidate model with a highest prediction result close degree corresponding to the temperature interval in which the estimated internal temperature falls is determined as a final preset regression model. Further, step S102 may be performed by using the preset regression model, to obtain a more accurate predicted internal temperature.

In a specific embodiment, step S103 may include the step: adjusting heating power of the cooking device 1 according to a difference between the predicted internal temperature of the cooked object 2 and a standard internal temperature.

Specifically, the standard internal temperature is determined according to a standard recipe and/or historical data of the cooked object 2, to improve the accuracy of setting the standard internal temperature. For example, the standard recipe may be stored in the memory and record a temperature that the cooked object 2 should reach during cooking. The control module 11 may obtain the standard internal temperature from the memory and compare the standard internal temperature with the predicted internal temperature predicted in step S102, and then adjust heating power of the heating module 12 according to a difference between the two temperature values.

Further, the standard internal temperature may be comprehensively determined with reference to the standard recipe and the historical data. For example, an average value of a value defined in the standard recipe and a predicted internal temperature obtained historically when the cooked object 2 is cooked by using the cooking device 1 is used as the standard internal temperature. Further, the average value may be a weighted average value. For example, after the historical operation of the cooking device 1 is completed, a score of a user for a current cooking result may be received, and a higher score indicates a higher weight of a predicted internal temperature obtained during this operation.

Therefore, during cooking, heating power is adjusted in real time according to a result of comparison between two temperatures, to ensure that a degree of doneness of the food meets an expectation. Further, the degree of doneness of the food may be measured according to the result of comparison between two temperatures, and correction is performed in time when the degree of doneness deviates from the expectation. For example, when the degree of doneness is insufficient, the heating power can be increased, to accelerate cooking of the food. When the degree of doneness is overdone, the heating power can be reduced, to slow down further cooking of the food.

In a specific embodiment, step S103 may include the step: adjusting heating power of the cooking device 1 according to a difference between the predicted internal temperature of the cooked object 2 and a standard internal temperature; and
adjusting a vapor conveying capacity of the cooking device 1 according to a difference between the chamber humidity of the cooking device 1 and standard humidity.

In addition to monitoring a temperature, humidity in the chamber 10 is monitored during operation of the cooking device 1, which is conducive to maintaining cooking quality and food freshness.

Specifically, the chamber humidity of the cooking device 1 may be acquired by using a hygrometer disposed in the chamber 10. Alternatively, the chamber humidity of the cooking device 1 may be reckoned based on a thermodynamic image in the chamber 10 photographed by the thermal imaging device 14.

Further, similar to the standard internal temperature, standard humidity may also be determined according to the standard recipe and/or the historical data.

Therefore, it can be ensured that the degree of doneness of the food meets the expectation, and it can also be ensured that a degree of dryness on the surface of the food meets the expectation. Further, the degree of doneness of the food may be measured according to the result of comparison between two temperatures, and correction is performed in time when the degree of doneness deviates from the expectation. For example, when the degree of doneness is insufficient, the heating power can be increased, to accelerate cooking of the food. In another example, when the degree of doneness is overdone, the heating power can be reduced, to slow down further cooking of the food. Further, water content of the food may be measured according to a result of comparison between two humidity, and correction is performed in time when the water content deviates from the expectation. For example, too little or too much water content will affect the taste of a final product, and a vapor conveying capacity may be adjusted to improve the water content, so that the food will not be cooked too dry or cooked too wet.

In a specific embodiment, step S103 may include the step: adjusting heating power and/or a heating direction of at least one heating module in the cooking device according to a difference between the predicted internal temperature of the cooked object and a standard internal temperature and a difference between a real-time thermodynamic image of the cooked object and a standard thermodynamic image.

Specifically, through pre-training and marking, a thermodynamic image when the cooked object 2 is cooked to an optimal state may be determined as a standard thermodynamic image and stored in the memory.

Further, when step S103 is performed, in addition to comparing the predicted internal temperature with the standard internal temperature, the control module 11 may further invoke the standard thermodynamic image of the cooked object 2 from the memory and compare the standard thermodynamic image with a real-time thermodynamic image currently acquired by the thermal imaging device 14.

Generally, a temperature is represented by using a brightness in the thermodynamic image, and a higher brightness indicates a higher temperature of this region. The control module 11 may compare, region by region, a brightness of the real-time thermodynamic image and a brightness of the standard thermodynamic image of this region, to find whether there is an uneven heating phenomenon in time.

If a brightness deviation of a region is greater than a preset threshold, it may be determined that a cooking state of the region does not meet an expectation. For example, if a brightness of a real-time thermodynamic image of the region is lower than a brightness of a standard thermodynamic image, it indicates that the region is underheated. The control module 11 may properly increase heating power radiated from a heating module 12 to the region or adjust a heating direction of a heating module 12 around the region to the region. In another example, if a brightness of a real-time thermodynamic image of the region is higher than the brightness of the standard thermodynamic image, it indicates that the region is overheated. The control module 11 may properly reduce heating power radiated from a heating module 12 to the region or deviate a heating direction of the heating module 12 to the region.

Therefore, during cooking, heating power is adjusted in real time according to a result of comparison between two temperatures, to ensure that a degree of doneness of the food meets an expectation. Further, the degree of doneness of the food may be measured according to the result of comparison between two temperatures, and correction is performed in time when the degree of doneness deviates from the expectation. For example, when the degree of doneness is insufficient, the heating power can be increased, to accelerate cooking of the food. When the degree of doneness is overdone, the heating power can be reduced, to slow down further cooking of the food. Further, the uneven heating phenomenon may be accurately learned through comparison between the thermodynamic images, so that the cooking device 1 can automatically adopts an appropriate measure to eliminate the uneven heating phenomenon. For example, heating power and/or a heating direction of each heating module 12 is adjusted in a targeted manner according to a specific uneven distribution of heating.

In a specific embodiment, step S103 may include the following steps: determining surface humidity of the cooked object 2 according to the thermodynamic image of the cooked object 2; and adjusting a vapor conveying capacity and/or a spraying direction of at least one spraying module 13 in the cooking device 1 according to the surface humidity of the cooked object 2

Specifically, a surface temperature of the cooked object 2 is determined according to the thermodynamic image, and then surface humidity of the cooked object 2 is determined with reference to the preset temperature and humidity relationship table. Therefore, the surface humidity of the cooked object 2 may be obtained by using the thermal imaging device 14 without additionally disposing a hygrometer.

Further, because the thermodynamic image can comprehensively reflect surface temperatures of various regions of the cooked object 2, the surface humidity of the regions of the cooked object 2 may be obtained based on the thermodynamic image. Therefore, the control module 11 may compare, region by region, surface humidity obtained in real time with standard humidity of the regions, to adjust vapor conveying capacities and/or spraying directions of the spraying modules 13 acted on the regions in a targeted manner.

For example, if the surface humidity indicates that the part of the cooked object 2 has been dried, but another part is still wet, vapor conveying capacities and/or spraying directions of individual spraying modules 13 may be adjusted, to increase vapor conveyed to a dried region and reduce vapor conveyed to a relatively wet region.

Further, the control module 11 may further adjust the heating power and/or the heating direction of the heating module 12 according to the surface humidity. For example, a heating degree of the dried region may be reduced, and a heating degree of the relatively wet region may be increased. In this way, an effect of balancing water content of the surface of the cooked object 2 may also be achieved.

Therefore, water content of the food is measured based on the surface humidity, and correction is performed in time when the water content deviates from the expectation. For example, too little or too much water content will affect the taste of a final product, and an operating status of the spraying module 13 may be adjusted to improve the water content, so that the food will not be cooked too dry or cooked too wet. Further, the surface humidity determined according to the thermodynamic image can reflect a difference between water content of regions on the surface of the food. Based on the foregoing, the cooking device 1 may differentially adjust the operating status of each spraying module 13 for water content of different regions of the food, to balance an overall humidity condition of the surface of the food.

Further, cooked objects 2 of different weights and different thicknesses may correspond to different standard internal temperatures, different standard humidity, and/or different standard thermodynamic images.

Further, cooked objects 2 cooked according to different standard recipes may correspond to different standard internal temperatures, different standard humidity, and/or different standard thermodynamic images.

In a typical application scenario, the cooking device 1 may include an oven. Therefore, an embodiment of the present invention provides a non-invasive food internal temperature measurement method applicable to an oven application scenario. During baking, monitoring data of dimensions such as a surface temperature of food is captured by using a thermal imaging camera, and historical data is trained by using a machine learning technology, to obtain a correlation between an internal temperature of the food and the monitoring data. The internal temperature of the food is measured without using any additional temperature gauge or probe. Further, in this embodiment, after the internal temperature of the food is obtained, the oven can automatically adjust an operating status thereof according to a real-time internal temperature of the food, to improve a cooking result of the food, thereby implementing intelligent control of the oven.

For example, after food is put into the oven, a weight of the food is first measured by using the weight sensor 15 on the tray 16. After cooking is started, the thermal imaging device 14 monitors a surface temperature and surface humidity of the food in real time and measures a chamber temperature of the chamber 10 of the oven. After receiving the monitoring data, a main control (that is, the control module 11) of the oven reckons a predicted internal temperature of the food according to a preset regression model.

Further, the main control of the oven adjusts a temperature of the oven and an output of humidity according to the surface temperature and the surface humidity of the food, the chamber temperature, the real-time reckoned predicted internal temperature and according to a preset intelligent recipe and historical data.

Based on the foregoing, by using the solution of this embodiment, the cooking device 1 can measure an internal temperature of food by using a non-invasive method during food cooking and adjust an operating status thereof according to a real-time internal temperature. For example, during cooking, monitoring data of dimensions such as a surface temperature of food is captured by using a thermal imaging camera, and historical data is trained by using a machine learning technology, to obtain a correlation between an internal temperature of the food and the monitoring data. The internal temperature of the food is measured without using any additional temperature gauge or probe. Further, after the internal temperature of the food is obtained, the control module 11 can automatically adjust a specific operating state of the cooking device 1 according to the internal temperature of the food, to improve a cooking result of the food, thereby implementing intelligent control of the cooking device 1.

Further, by using the solution of this embodiment, intelligent control of the cooking device 1 can be implemented, to optimize a cooking result. Specifically, measured parameters related to food are relatively comprehensive. In addition to surface temperature information, an internal temperature of food can be further predicted, which is conducive to accurately monitoring a real-time cooking state of the food. Further, the internal temperature of the food is obtained in a non-invasive manner based on a preset regression model without requiring a destructive method such as probe insertion, to ensure that an appearance of the food keeps intact. Further, an actual cooking state of the food is accurately measured according to a predicted internal temperature, so that an operating status of the cooking device 1 is automatically adjusted, to optimize the cooking result, thereby ensuring better cooking results inside the food and on a surface of the food at the end of cooking.

An embodiment of the present invention further provides a computer-readable storage medium, which is a non-volatile storage medium or a non-transient storage medium, having a computer program stored thereon, where the computer program, when executed by a processor, performs the steps of the foregoing method provided by any one of the embodiments.

Although specific implementations have been described above, these implementations are not intended to limit the scope of the present disclosure, even if only one implementation is described with respect to specific features. The feature example provided in the present disclosure is intended to be illustrative rather than limiting, unless otherwise stated. In specific implementations, the technical features of one or more dependent claims may be combined with the technical features of the independent claims, and the technical features from the corresponding independent claims may be combined in any appropriate manner, rather than only in the specific combinations listed in the claims.

Although the present invention is disclosed above, the present invention is not limited thereto. Any person skilled in the art can make various changes and modifications without departing from the scope of the present invention. Therefore, the protection scope of the present invention should be subject to the scope defined by the claims.

## Claims

1. A control method for a cooking device, comprising:
- performing monitoring during operation of a cooking device, to obtain monitoring data, wherein a dimension of the monitoring data comprises at least one of a surface temperature of a cooked object, a weight of the cooked object, or a chamber temperature of the cooking device;
**characterized in that** the method further comprises:
- inputting the monitoring data to a preset regression model, to obtain a predicted internal temperature of the cooked object, wherein the preset regression model is used for representing a correlation between an internal temperature of the cooked object and the monitoring data; and
- adjusting an operating status of the cooking device according to at least the predicted internal temperature of the cooked object.

2. The control method according to claim 1, **characterized in that** the adjusting an operating status of the cooking device according to at least the predicted internal temperature of the cooked object obtained through prediction comprises:
adjusting heating power of the cooking device according to a difference between the predicted internal temperature of the cooked object and a standard internal temperature.

3. The control method according to claim 2, **characterized in that** the standard internal temperature is determined according to a standard recipe and/or historical data of the cooked object.

4. The control method according to claim 1, **characterized in that** the dimension of the monitoring data further comprises chamber humidity of the cooking device.

5. The control method according to claim 4, **characterized in that** the adjusting an operating status of the cooking device according to at least the predicted internal temperature of the cooked object obtained through prediction comprises:
adjusting heating power of the cooking device according to a difference between the predicted internal temperature of the cooked object and a standard internal temperature; and
adjusting a vapor conveying capacity of the cooking device according to a difference between the chamber humidity of the cooking device and standard humidity.

6. **The** control method according to claim 1, **characterized in that** the dimension of the monitoring data further comprises: a thermodynamic image of the cooked object.

7. **The** control method according to claim 6, **characterized in that** the adjusting an operating status of the cooking device according to at least the predicted internal temperature of the cooked object comprises:
adjusting heating power and/or a heating direction of at least one heating module in the cooking device according to a difference between the predicted internal temperature of the cooked object and a standard internal temperature and a difference between a real-time thermodynamic image of the cooked object and a standard thermodynamic image, wherein the cooking device comprises a plurality of heating modules, and the plurality of heating modules are dispersedly disposed on different regions of the cooking device.

8. **The** control method according to claim 6 or 7, **characterized in that** the adjusting an operating status of the cooking device according to at least the predicted internal temperature of the cooked object comprises:
determining surface humidity of the cooked object according to the thermodynamic image of the cooked object; and
adjusting a vapor conveying capacity and/or a spraying direction of at least one spraying module in the cooking device according to the surface humidity of the cooked object, wherein the cooking device comprises a plurality of spraying modules, and the plurality of spraying modules are dispersedly disposed on different regions of the cooking device.

9. **The** control method according to claim 1, **characterized in that** the preset regression model is used for representing the correlation between the internal temperature of the cooked object and the monitoring data based on a prediction function, the prediction function is a result of weighted summation on monitoring data of a plurality of dimensions, and monitoring data of different dimensions correspond to different weights.

10. The control method according to claim 9, **characterized in that** the prediction function further comprises an adjustment coefficient used for adjusting the result of weighted summation on the monitoring data of the plurality of dimensions.

11. The control method according to claim 9, **characterized in that** a weight corresponding to monitoring data of each dimension is obtained through training according to historical data, and the historical data comprises monitoring data obtained through monitoring during historical operation of the cooking device and a corresponding actually measured internal temperature of the cooked object.

12. The control method according to claim 1, **characterized in that** before the inputting the monitoring data to a preset regression model, to predict an internal temperature of the cooked object, the control method further comprises:
selecting the preset regression model from a plurality of candidate models according to the monitoring data, wherein different candidate models are obtained through training based on different sample sets, and the sample set comprises monitoring data obtained through monitoring during historical operation of the cooking device and a corresponding actually measured internal temperature of the cooked object.

13. The control method according to claim 12, **characterized in that** monitoring data comprised in different sample sets is different in at least one dimension, and/or there are different quantities of dimensions of monitoring data comprised in different sample sets.

14. The control method according to claim 12, **characterized in that** the dimension of the monitoring data comprised in the sample set further comprises a thickness of the cooked object.

15. The control method according to claim 12, **characterized in that** the selecting the preset regression model from a plurality of candidate models according to the monitoring data comprises:
inputting the monitoring data to at least one candidate model, to obtain an estimated internal temperature of the cooked object; and
determining, in the plurality of candidate models, a candidate model with a highest prediction result close degree in a temperature interval in which the estimated internal temperature of the cooked object falls as the preset regression model, wherein the prediction result close degree refers to a similarity between a predicted internal temperature of the cooked object obtained by inputting the monitoring data obtained through monitoring during historical operation of the cooking device to the candidate model and the corresponding actually measured internal temperature of the cooked object.

16. The control method according to claim 1, **characterized in that** the preset regression model is in a one-to-one correspondence with a type of the cooked object.

17. The control method according to claim 1, **characterized in that** the cooking device comprises: an oven.

18. A cooking device (1), comprising:
a chamber (10), configured to accommodate a cooked object (2);
**characterized by further comprising:**
a control module (11), configured to perform the method according to any one of claims 1 to 17, to control an operating status of the cooking device (1); and
a thermal imaging device (14), disposed inside the chamber (10) for acquiring monitoring data of at least one dimension, wherein the control module (11) communicates with the thermal imaging device (14) to obtain the monitoring data.

19. The cooking device (1) according to claim 18, **characterized by** further comprising: a tray (16), configured to contain the cooked object (2); and
a weight sensor (15), disposed on the tray (16) for acquiring monitoring data of at least one dimension, wherein the control module (11) communicates with the weight sensor (15) to obtain the monitoring data.

20. A computer-readable storage medium, the computer-readable storage medium being a non-volatile storage medium or a non-transitory storage medium, having a computer program stored thereon, **characterized in that** the computer program, when executed by a processor, performs the steps of the method according to any one of claims 1 to 17.

## Patentansprüche

1. Steuerverfahren für eine Kochvorrichtung, das Folgendes umfasst:
- Durchführen einer Überwachung beim Betrieb einer Kochvorrichtung zwecks Erhaltens von Überwachungsdaten, wobei eine Größe in den Überwachungsdaten eine Oberflächentemperatur eines gekochten Gegenstands, ein Gewicht des gekochten Gegenstands und/oder eine Garraumtemperatur der Kochvorrichtung umfasst,
**dadurch gekennzeichnet, dass das Verfahren ferner Folgendes umfasst:**
- Eingeben der Überwachungsdaten in ein voreingestelltes Regressionsmodell zwecks Erhaltens einer prognostizierten Innentemperatur des gekochten Gegenstands, wobei das voreingestellte Regressionsmodell zum Darstellen einer Korrelation zwischen einer Innentemperatur des gekochten Gegenstands und den Überwachungsdaten dient, und
- Einstellen eines Betriebszustands der Kochvorrichtung zumindest entsprechend der prognostizierten Innentemperatur des gekochten Gegenstands.

2. Steuerverfahren nach Anspruch 1, **dadurch gekennzeichnet, dass** das Einstellen eines Betriebszustands der Kochvorrichtung zumindest entsprechend der prognostizierten Innentemperatur des gekochten Gegenstands, die durch Prognose erhalten wird, Folgendes umfasst: Einstellen einer Heizleistung der Kochvorrichtung entsprechend einer Differenz zwischen der prognostizierten Innentemperatur des gekochten Gegenstands und einer normalen Innentemperatur.

3. Steuerverfahren nach Anspruch 2, **dadurch gekennzeichnet, dass** die normale Innentemperatur einem normalen Rezept und/oder Bestandsdaten zum gekochten Gegenstand entsprechend bestimmt wird.

4. Steuerverfahren nach Anspruch 1, **dadurch gekennzeichnet, dass** die Größe in den Überwachungsdaten ferner eine Garraumfeuchtigkeit in der Kochvorrichtung umfasst.

5. Steuerverfahren nach Anspruch 4, **dadurch gekennzeichnet, dass** das Einstellen eines Betriebszustands der Kochvorrichtung zumindest entsprechend der prognostizierten Innentemperatur des gekochten Gegenstands, die durch Prognose erhalten wird, Folgendes umfasst:
Einstellen einer Heizleistung der Kochvorrichtung entsprechend einer Differenz zwischen der prognostizierten Innentemperatur des gekochten Gegenstands und einer normalen Innentemperatur und
Einstellen einer Dampfleitkapazität der Kochvorrichtung entsprechend einer Differenz zwischen der Garraumfeuchtigkeit in der Kochvorrichtung und einer normalen Feuchtigkeit.

6. Steuerverfahren nach Anspruch 1, **dadurch gekennzeichnet, dass** die Größe in den Überwachungsdaten ferner Folgendes umfasst: ein Wärmebild von dem gekochten Gegenstand.

7. Steuerverfahren nach Anspruch 6, **dadurch gekennzeichnet, dass** das Einstellen eines Betriebszustands der Kochvorrichtung zumindest entsprechend der prognostizierten Innentemperatur des gekochten Gegenstands Folgendes umfasst:
Einstellen einer Heizleistung und/oder einer Heizrichtung mindestens eines Heizmoduls in der Kochvorrichtung entsprechend einer Differenz zwischen der prognostizierten Innentemperatur des gekochten Gegenstands und einer normalen Innentemperatur und einer Differenz zwischen einem Echtzeit-Wärmebild von dem gekochten Gegenstand und einem normalen Wärmebild, wobei die Kochvorrichtung mehrere Heizmodule umfasst und die mehreren Heizmodule auf verschiedene Bereiche der Kochvorrichtung verteilt angeordnet sind.

8. Steuerverfahren nach Anspruch 6 oder 7, **dadurch gekennzeichnet, dass** das Einstellen eines Betriebszustands der Kochvorrichtung zumindest entsprechend der prognostizierten Innentemperatur des gekochten Gegenstands Folgendes umfasst:
Bestimmen einer Oberflächenfeuchtigkeit des gekochten Gegenstands entsprechend seinem Wärmebild und
Einstellen einer Dampfleitkapazität und/oder einer Sprührichtung mindestens eines Sprühmoduls in der Kochvorrichtung entsprechend der Oberflächenfeuchtigkeit des gekochten Gegenstands, wobei die Kochvorrichtung mehrere Sprühmodule umfasst und die mehreren Sprühmodule auf verschiedene Bereiche der Kochvorrichtung verteilt angeordnet sind.

9. Steuerverfahren nach Anspruch 1, **dadurch gekennzeichnet, dass** das voreingestellte Regressionsmodell zum Darstellen der Korrelation zwischen der Innentemperatur des gekochten Gegenstands und den Überwachungsdaten auf der Grundlage einer Prognosefunktion dient, die sich durch eine gewichtete Summierung an Überwachungsdaten mehrerer Größen ergibt, und Überwachungsdaten verschiedener Größen unterschiedlichen Gewichtungen entsprechen.

10. Steuerverfahren nach Anspruch 9, **dadurch gekennzeichnet, dass** die Prognosefunktion ferner einen Einstellungskoeffizienten umfasst, der zum Einstellen des Ergebnisses einer gewichteten Summierung an den Überwachungsdaten der mehreren Größen dient.

11. Steuerverfahren nach Anspruch 9, **dadurch gekennzeichnet, dass** durch Trainieren gemäß Bestandsdaten eine Gewichtung erhalten wird, die Überwachungsdaten jeder Größe entspricht, und die Bestandsdaten Überwachungsdaten, die durch Überwachen beim früheren Betrieb der Kochvorrichtung erhalten wurden, und eine entsprechende tatsächlich gemessene Innentemperatur des gekochten Gegenstands umfassen.

12. Steuerverfahren nach Anspruch 1, **dadurch gekennzeichnet, dass** das Steuerverfahren zum Prognostizieren einer Innentemperatur des gekochten Gegenstands vor dem Eingeben der Überwachungsdaten in ein voreingestelltes Regressionsmodell ferner Folgendes umfasst:
Auswählen des voreingestellten Regressionsmodells unter mehreren geeigneten Modellen entsprechend den Überwachungsdaten, wobei durch Trainieren auf der Grundlage unterschiedlicher Probensätze verschiedene geeignete Modelle erhalten werden und der Probensatz Überwachungsdaten, die durch Überwachen beim früheren Betrieb der Kochvorrichtung erhalten wurden, und eine entsprechende tatsächlich gemessene Innentemperatur des gekochten Gegenstands umfasst.

13. Steuerverfahren nach Anspruch 12, **dadurch gekennzeichnet, dass** sich Überwachungsdaten in verschiedenen Probensätzen in mindestens einer Größe unterscheiden und/oder es in den verschiedenen Probensätzen eine unterschiedliche Anzahl von Größen in den Überwachungsdaten gibt.

14. Steuerverfahren nach Anspruch 12, **dadurch gekennzeichnet, dass** die Größe in den Überwachungsdaten in dem Probensatz ferner eine Dicke des gekochten Gegenstands umfasst.

15. Steuerverfahren nach Anspruch 12, **dadurch gekennzeichnet, dass** das Auswählen des voreingestellten Regressionsmodells unter mehreren geeigneten Modellen entsprechend den Überwachungsdaten Folgendes umfasst:
Eingeben der Überwachungsdaten in mindestens ein geeignetes Modell zwecks Erhaltens einer geschätzten Innentemperatur des gekochten Gegenstands und Bestimmen eines geeigneten Modells mit einem höchsten Nähegrad des Prognoseergebnisses unter den mehreren geeigneten Modellen in einem Temperaturintervall, in das die geschätzte Innentemperatur des gekochten Gegenstands fällt, als voreingestelltes Regressionsmodell, wobei der Nähegrad des Prognoseergebnisses eine Ähnlichkeit zwischen einer prognostizierten Innentemperatur des gekochten Gegenstands, die durch Eingeben der durch Überwachen beim früheren Betrieb der Kochvorrichtung erhaltenen Überwachungsdaten in das geeignete Modell erhalten wird, und der entsprechenden tatsächlich gemessenen Innentemperatur des gekochten Gegenstands bezeichnet.

16. Steuerverfahren nach Anspruch 1, **dadurch gekennzeichnet, dass** das voreingestellte Regressionsmodell eine eineindeutige Beziehung zu einem Typ des gekochten Gegenstands aufweist.

17. Steuerverfahren nach Anspruch 1, **dadurch gekennzeichnet, dass** die Kochvorrichtung Folgendes umfasst: einen Backofen.

18. Kochvorrichtung (1), die Folgendes umfasst:
einen Garraum (10), der so ausgelegt ist, dass er einen gekochten Gegenstand (2) aufnimmt,
**dadurch gekennzeichnet, dass sie ferner Folgendes umfasst:**
ein Steuermodul (11), das so ausgelegt ist, dass es das Verfahren nach einem der Ansprüche 1 bis 17 ausführt und so einen Betriebszustand der Kochvorrichtung (1) steuert, und
eine Thermografievorrichtung (14) zum Erfassen von Überwachungsdaten mindestens einer Größe, die in dem Garraum (10) angeordnet ist, wobei das Steuermodul (11) mit der Thermografievorrichtung (14) Daten austauscht und so die Überwachungsdaten erhält.

19. Kochvorrichtung (1) nach Anspruch 18, **dadurch gekennzeichnet, dass** sie ferner Folgendes umfasst: eine Schale (16), die so ausgelegt ist, dass sie den gekochten Gegenstand (2) aufnimmt, und
einen Gewichtssensor (15) zum Erfassen von Überwachungsdaten mindestens einer Größe, der an der Schale (16) angeordnet ist, wobei das Steuermodul (11) mit dem Gewichtssensor (15) Daten austauscht und so die Überwachungsdaten erhält.

20. Computerlesbares Speichermedium, bei dem es sich um ein nichtflüchtiges oder ein dauerhaftes Speichermedium handelt, auf dem ein Computerprogramm gespeichert ist, **dadurch gekennzeichnet, dass** das Computerprogramm, wenn es von einem Prozessor ausgeführt wird, die Schritte des Verfahrens nach einem der Ansprüche 1 bis 17 durchführt.

## Revendications

1. Procédé de commande pour un dispositif de cuisson, comprenant:
- effectuer un contrôle pendant le fonctionnement d'un dispositif de cuisson pour obtenir des données de contrôle, où une dimension des données de contrôle comprend au moins l'un parmi une température de surface d'un objet cuisiné, un poids de l'objet cuisiné ou une température de chambre du dispositif de cuisson ;
**caractérisé en ce que** le procédé comprend en outre :
- entrer les données de contrôle dans un modèle de régression prédéterminé pour obtenir une prédiction de température interne de l'objet cuisiné, où le modèle de régression prédéterminé sert à représenter une corrélation entre une température interne de l'objet cuisiné et les données de contrôle ; et
- ajuster un état de fonctionnement du dispositif de cuisson selon au moins la température interne prédite de l'objet cuisiné.

2. Procédé de commande selon la revendication 1, **caractérisé en ce que** l'ajustement d'un état de fonctionnement du dispositif de cuisson selon au moins la température interne prédite de l'objet cuisiné obtenue par prédiction comprend :
ajuster une puissance de chauffage du dispositif de cuisson en fonction d'une différence entre la température interne prédite de l'objet cuisiné et une température interne standard.

3. Procédé de commande selon la revendication 2, **caractérisé en ce que** la température interne standard est déterminée selon une recette standard et/ou un historique de données de l'objet cuisiné.

4. Procédé de commande selon la revendication 1, **caractérisé en ce que** la dimension des données de contrôle comprend en outre l'humidité de chambre du dispositif de cuisson.

5. Procédé de commande selon la revendication 4, **caractérisé en ce que** l'ajustement d'un état de fonctionnement du dispositif de cuisson selon au moins la température interne prédite de l'objet cuisiné obtenue par prédiction comprend :
ajuster une puissance de chauffage du dispositif de cuisson en fonction d'une différence entre la température interne prédite de l'objet cuisiné et une température interne standard ; et
ajuster une capacité de transport de vapeur du dispositif de cuisson en fonction d'une différence entre l'humidité de la chambre du dispositif de cuisson et une humidité standard.

6. Procédé de commande selon la revendication 1, **caractérisé en ce que** la dimension des données de contrôle comprend en outre : une image thermodynamique de l'objet cuisiné.

7. Procédé de commande selon la revendication 6, **caractérisé en ce que** l'ajustement d'un état de fonctionnement du dispositif de cuisson selon au moins la température interne prédite de l'objet cuisiné comprend :
ajuster une puissance de chauffage et/ou une direction de chauffage d'au moins un module de chauffage dans le dispositif de cuisson en fonction d'une différence entre la température interne prédite de l'objet cuisiné et une température interne standard et une différence entre une image thermodynamique en temps réel de l'objet cuisiné et une image thermodynamique standard, où le dispositif de cuisson comprend une pluralité de modules de chauffage, et la pluralité de modules de chauffage est disposée de façon dispersée sur différentes régions du dispositif de cuisson.

8. Procédé de commande selon la revendication 6 ou 7, **caractérisé en ce que** l'ajustement d'un état de fonctionnement du dispositif de cuisson selon au moins la température interne prédite de l'objet cuisiné comprend :
déterminer une humidité de surface de l'objet cuisiné en fonction de l'image thermodynamique de l'objet cuisiné ; et
ajuster une capacité de transport de vapeur et/ou une direction de pulvérisation d'au moins un module de pulvérisation dans le dispositif de cuisson en fonction de l'humidité de surface de l'objet cuisiné, où le dispositif de cuisson comprend une pluralité de modules de pulvérisation, et la pluralité de modules de pulvérisation est disposée de façon dispersée sur différentes régions du dispositif de cuisson.

9. Procédé de commande selon la revendication 1, **caractérisé en ce que** le modèle de régression prédéterminé sert à représenter la corrélation entre la température interne de l'objet cuisiné et les données de contrôle basées sur une fonction de prédiction, la fonction de prédiction étant un résultat d'une sommation pondérée sur des données de contrôle d'une pluralité de dimensions, et les données de contrôle de différentes dimensions correspondent à différents poids.

10. Procédé de commande selon la revendication 9, **caractérisé en ce que** la fonction de prédiction comprend en outre un coefficient d'ajustement servant à ajuster le résultat de la sommation pondérée sur les données de contrôle de la pluralité de dimensions.

11. Procédé de commande selon la revendication 9, **caractérisé en ce qu'**un poids correspondant à des données de contrôle de chaque dimension est obtenu par entraînement selon un historique de données, et l'historique de données comprend des données de contrôle obtenues par contrôle pendant l'historique de fonctionnement du dispositif de cuisson et une température interne correspondante effectivement mesurée de l'objet cuisiné.

12. Procédé de commande selon la revendication 1, **caractérisé en ce qu'**avant d'entrer les données de contrôle dans un modèle de régression prédéterminé pour prédire une température interne de l'objet cuisiné, le procédé de commande comprend en outre :
sélectionner un modèle de régression prédéterminé parmi une pluralité de modèles candidats pour les données de contrôle, où différents modèles candidats sont obtenus par entraînement basé sur différents jeux d'échantillons, et le jeu d'échantillons comprend des données de contrôle obtenues par contrôle pendant un historique de fonctionnement du dispositif de cuisson et une température interne correspondante effectivement mesurée de l'objet cuisiné.

13. Procédé de commande selon la revendication 12, **caractérisé en ce que** des données de contrôle comprises dans différents jeux d'échantillons sont différentes dans au moins une dimension, et/ou il y a différentes quantités de dimensions de données de contrôle comprises dans différents jeux d'échantillons.

14. Procédé de commande selon la revendication 12, **caractérisé en ce que** la dimension des données de contrôle comprises dans le jeu d'échantillons comprend en outre une épaisseur de l'objet cuisiné.

15. Procédé de commande selon la revendication 12, **caractérisé en ce que** la sélection du modèle de régression prédéterminé parmi une pluralité de modèles candidats en fonction des données de contrôle comprend :
entrer les données de contrôle dans au moins un modèle candidat pour obtenir une estimation de température interne de l'objet cuisiné ; et
déterminer, dans la pluralité de modèles candidats, un modèle candidat avec un plus haut degré de proximité au résultat prédictif dans un intervalle de température dans lequel l'estimation de la température interne de l'objet cuisiné tombe dans le cadre du modèle de régression prédéterminé, où le degré de proximité au résultat prédictif se réfère à une similarité entre une température interne prédite de l'objet cuisiné obtenue en entrant les données de contrôle obtenues par contrôle pendant l'historique de fonctionnement du dispositif de cuisson pour le modèle candidat et la température interne correspondante effectivement mesurée de l'objet cuisiné.

16. Procédé de commande selon la revendication 1, **caractérisé en ce que** le modèle de régression prédéterminé est en correspondance un pour un avec un type de l'objet cuisiné.

17. Procédé de commande selon la revendication 1, **caractérisé en ce que** le dispositif de cuisson comprend : un four.

18. Dispositif de cuisson (1) comprenant :
une chambre (10) conçue pour accueillir un objet cuisiné (2) ;
**caractérisé en ce qu'**il comprend en outre :
un module de commande (11) conçu pour effectuer le procédé selon l'une quelconque des revendications 1 à 17 pour commander un état de fonctionnement du dispositif de cuisson (1) ; et
un imageur thermique (14) disposé à l'intérieur de la chambre (10) pour acquérir des données de contrôle d'au moins une dimension, le module de commande (11) communiquant avec l'imageur thermique (14) pour obtenir les données de contrôle.

19. Dispositif de cuisson (1) selon la revendication 18, **caractérisé en ce qu'**il comprend en outre : un plateau (16) conçu pour contenir l'objet cuisiné (2) ; et
un capteur de poids (15) disposé sur le plateau (16) pour acquérir des données de contrôle d'au moins une dimension, le module de commande (11) communiquant avec le capteur de poids (15) pour obtenir les données de contrôle.

20. Support de stockage lisible par ordinateur, le support de stockage lisible par ordinateur étant un support de stockage non volatile ou un support de stockage non transitoire contenant un programme informatique, **caractérisé en ce que** le programme informatique, quand il est exécuté par un processeur, effectue les étapes du procédé selon l'une quelconque des revendications 1 à 17.
